# EUROPEAN PATENT APPLICATION

(11) **EP 4 295 684 A1**
(43) Date of publication of application: **27.12.2023**
(21) Application number: 22180430.5
(22) Date of filing: 22.06.2022
(51) Int. Cl.: A01N 43/707, A01N 47/12, A01P 13/02, A01N 43/80, A01N 43/78, A01N 43/82, A01N 47/30

(54) **AGROCHEMICAL HERBICIDAL COMPOSITION**

(71) Applicant: Adama Agan Ltd., 7710001 Ashdod (IL)
(72) Inventor: KERGOAT, Pierre-Yves, 75010 Paris (FR)
(74) Representative: Modiano, Gabriella Diana

(57) **Abstract**

A combination of herbicidal active ingredients for agricultural applications, tank mixes, methods for controlling weeds, and kits-of-parts comprising herbicidal active ingredients and an instruction manual comprising instructions to admix the components before being used.

## Description

### FIELD OF THE INVENTION

The present invention belongs to the field of agrochemistry. It is directed to a combination of herbicidal active ingredients for agricultural applications, to tank mixes, and to methods for controlling weeds.

### BACKGROUND

The vulnerability of crops to weeds makes crop protection management one of the major components of the total crop production system. Undesired weeds are very harmful to crop plants and can significantly reduce crop yields and qualities. Herbicides alone or in combination help minimize this damage by controlling threats to the crop. Many active ingredients either of the same class or having mixtures of different classes are commercially available for these purposes.

Combinations of herbicides or mixtures of one or more herbicides with other active ingredients are typically used to broaden spectrum of control, to minimize the doses of chemicals used, to retard the development of resistance and to reduce the cost of the treatment through additive effect. Although many combinations of one herbicide agent with one or more active ingredients have been studied, a synergistic effect is rarely attained.

Practical agricultural experience has shown that the repeated and exclusive application of an individual active ingredient in the control of a single weed leads in many cases to a selection of those weeds which have developed natural or adapted resistance against the active compound in question. Effective control of these weeds with the active compound in question is then no longer possible. Therefore, there is a need for active ingredients that help prevent or overcome resistance.

Active agent mixtures are described in the literature. However, the control over the weeds does not always satisfy the needs of agriculture practice. Additionally, the efficacy of the control provided by these mixtures is not always satisfactory, or it can create additional toxicological and/or environmental effects. Random pesticidal formulations and mixtures do not exert a satisfactory controlling effect in most of the cases, and therefore, there is an urgent need for the development of new pesticidal mixtures having satisfactory controlling effects with more than one active ingredient.

### SUMMARY OF THE INVENTION

It is an endeavor of the present invention to find mixtures that provide improved control of weeds. These improvements may come in the form of a synergistic efficacy among active ingredients, whether being applied simultaneously, that is jointly or separately, or in succession. That is, allowing better control of weeds than it is possible with the individual compounds alone. Improvements can also overcome at least one of the challenges in the prior art, for example, by reducing the dosage rate or by enhancing the spectrum of activity or by combining knock-down activity with prolonged control or by facilitating resistance management

A first aspect of the invention is a herbicidal composition comprising (a) metamitron, (b) a thiocarbamate herbicide, and (c) at least one herbicide selected from the groups consisting of 3-isoxazolidinones, oxyacetamides or urea inhibitors of photosynthesis at PS II.

A second aspect of the invention is directed to a tank mix combination comprising (a) metamitron, (b) a thiocarbamate herbicide, and (c) at least one herbicide selected from the groups consisting of 3-isoxazolidinones, oxyacetamides or urea inhibitors of photosynthesis at PS II, and (d) at least one adjuvant, additive and/or an active ingredient.

A third aspect of the invention is a method for the control of weeds comprising contacting an effective amount of (a) metamitron, (b) a thiocarbamate herbicide, and (c) at least one herbicide selected from the groups consisting of 3-isoxazolidinones, oxyacetamides or urea inhibitors of photosynthesis at PS II, with at least a locus where the weed is to be controlled.

A fourth aspect of the invention is a kit-of-parts comprising a plurality of components, wherein said plurality of components comprises: (a) a component comprising at least metamitron, (b) a component comprising at least a thiocarbamate herbicide, (c) a component comprising at least one herbicide selected from the groups consisting of 3-isoxazolidinones, oxyacetamides or urea inhibitors of photosynthesis at PS II, and (d) an instruction manual comprising instructions to admix the components before being used.

### DETAILED DESCRIPTION OF THE INVENTION

### Definitions

Embodiments of the present invention are discussed in detail below. In describing embodiments, specific terminology is employed for the sake of clarity. However, the invention is not intended to be limited to the specific terminology so selected. While specific exemplary embodiments are discussed, it should be understood that this is done for illustration purposes only. A person skilled in the relevant art will recognize that other components and configurations can be used without parting from the spirit and scope of the invention. While a number of embodiments and features are described herein, it is to be understood that the various features of the invention and aspects of embodiments, even if described separately, may be combined unless mutually exclusive or contrary to the specific description. All references cited herein are incorporated by reference as if each had been individually incorporated.

As used herein, the transitional term "comprising" or "that comprises", which is synonymous with "including," or "containing," is inclusive or open-ended and does not exclude additional, un-recited elements or method steps. However, in each recitation of "comprising" herein, it is intended that the term also encompass, as alternative embodiments, the phrases "consisting essentially of" and "consisting of", where "consisting of" excludes any element or step not specified and "consisting essentially of" permits the inclusion of additional un-recited elements or steps that do not materially affect the essential or basic and novel characteristics of the composition or method under consideration.

Prior to setting forth the present subject matter in detail, it may be helpful to provide definitions of certain terms to be used herein. Unless defined otherwise, all technical and scientific terms used herein have the same meaning as is commonly understood by one of skill in the art to which this subject matter pertains.

As used herein, the term "effective amount" when used in connection with an active ingredient or the herbicidal composition containing the mixture of active ingredients or the tank mix containing the mixture of active ingredients, refers to an amount of thereof that, when ingested, contacted with or sensed, is sufficient to achieve a good level of control of a weed.

As used herein, the term "effective amount" when used in connection with a non-active component, i.e. adjuvant, refers to an amount of the additive that is sufficient to perform its function within the formulation.

An "active ingredient" is a substance capable of controlling undesired plants (weeds), and does not cause significant damage to the treated crop plants. The term "active ingredient" comprises, but is not limited to insecticides, nematicides, herbicides, fungicides, algicides, animal repellents or acaricides. Active ingredients are not limited to pesticides, and also include for example hormones, bio-stimulants, and plant growth regulators.

As used herein, the term "herbicide" refers to an active ingredient capable of controlling unwanted plants or weeds, for example when growing in the locus of the desired crop.

As used herein, the term "agriculturally acceptable carrier" means a carrier which is known and accepted in the art for the formation of compositions for agricultural or horticultural use.

As used herein the term "plant" or "crop" or "crop plants" includes reference to whole plants, plant organs (e.g. leaves, stems, twigs, roots, trunks, limbs, shoots, fruits etc.), plant cells, or plant seeds, which have industrial interest, including grasslands and pastures, such as for example plants destined to human consumption, animal consumption or other industrial uses. This term also encompasses crops such as fruits. The term "plant" may also include the propagation material thereof, which may include all the generative parts of the plant such as seeds and vegetative plant material such as cuttings and tubers, which can be used for the multiplication of the plant. It may also include spores, corms, bulbs, rhizomes, sprouts basal shoots, stolons, and buds and other parts of plants, including seedlings and young plants, which are to be transplanted after germination or after emergence from soil. As used herein, the term "crop" includes plants which have been modified by breeding, mutagenesis or genetic engineering. Genetically modified plants are plants in which their genetic material has been modified by the use of recombinant DNA techniques. Typically, one or more genes have been integrated into the genetic material of such a plant in order to improve certain properties of the plant.

As used herein, the term "locus" includes a habitat, breeding ground, plant, seed adapted to produce a plant, propagation material, soil, field, area adjacent to a plant, material or environment in which a weed is growing or may grow.

As used herein, the terms "control" or "controlling" or "combatting" refers to preventing the growth of weeds, delaying the onset of weeds, and to killing or to reducing growth of weeds.

As used herein, the term "agriculturally acceptable inert additives" is defined as any substance that itself is not an active ingredient but is added to the formulation to improve its properties, such as stability, flowability, density, etc. Some substances can be used as agriculturally acceptable inert additives in the herbicidal composition of the invention or mixed as tank additives with the herbicidal composition of the invention prior to application in the field. Nonlimiting examples of agriculturally acceptable inert additives and of tank additives are chelating agents, thickeners, anti-foam agents, pH buffers, antifreeze agents, surfactants, emulsifiers, wetting agents or humectants, suspending agents, stabilizers, anti-oxidation agents, preservative agents, inverting agents, UV absorbers, binders, pigments, colorants or solvents.

As used herein, the term "adjuvant" is broadly defined as any substance that itself is not an active ingredient, but which enhances or is intended to enhance the effectiveness of the herbicide with which it is used. Adjuvants may be understood to include, but are not limited to, safeners, spreading agents, plant penetrants (or translocators), compatibility agents, drift retardants, soil penetrants, stickers, fertilizers. They are typically used to dilute ready mix formulations prior to application in the field, although some formulations include built-in adjuvants.

As used herein, the term "ready mix" means a formulation that may be applied to plants directly after dilution. The formulation comprises one or more active ingredients. The term "mixture" refers, but is not limited to, a combination in any physical form, e.g., blend, solution, alloy, or the like.

As used herein, the term "tank mix" refers to the mixture of two or more active ingredients or compositions that are mixed shortly before application. Tank mixtures can therefore be formed by mixing one or more compositions (each comprising one or more active ingredients) with water and/or with one or more adjuvants, or they can be formed by mixing the active ingredients *in situ* with water and/or with one or more adjuvants.

The term "a" or "an" as used herein includes the singular and the plural, unless specifically stated otherwise. Therefore, the terms "a," "an" or "at least one" can be used interchangeably in this application.

As used herein the term "ha" refers to hectare.

As used herein, the term "g" refers to gram, and "L" or "I" refers to litre.

As used herein, the term "more effective" includes, but is not limited to, increasing efficacy of the herbicidal control, prolonging protection and reducing the amount of time needed to achieve a given level of herbicidal control, prolonging the duration of protection against weeds attack after application and extending the protection period against weeds attack and/or reducing the amount of time needed to achieve a level of weeds control compared to when each pesticide at the same amount is applied alone.

The term "enhancing crop plants" as used herein means improving one or more of plant quality, plant vigor, nutrient uptake, root system, tolerance to stress factors, and/or yield in a plant to which the mixture or formulation described herein has been applied as compared to a control plant grown under the same conditions without the mixture or formulation described herein.

The term "enhancing the root system" as used herein means that the root system is improved qualitatively or quantitatively in a plant to which the mixture or formulation described herein has been applied as compared to the root systems in a control plant grown under the same conditions without the mixture or formulation described herein. Enhanced root systems include but are not limited to improved visual appearance and composition of the root system (i.e., improved color, density, and uniformity), increased root growth, a more developed root system, stronger and healthier roots, improved plant stand, and increased root system weight.

The term "improving plant quality" as used herein means that one or more traits are improved qualitatively or quantitatively in a plant to which the mixture or formulation described herein has been applied as compared to the same trait in a control plant grown under the same conditions without the mixture or formulation described herein. Such traits include but are not limited to improved visual appearance and composition of the plant (i.e., improved color, density, uniformity, compactness), reduced ethylene (reduced production and/or inhibition of reception), improved visual appearance and composition of harvested material (i.e., seeds, fruits, leaves, vegetables, shoot/stem/cane), improved carbohydrate content (i.e., increased quantities of sugar and/or starch, improved sugar acid ratio, reduction of reducing sugars, increased rate of development of sugar), improved protein content, improved oil content and composition, improved nutritional value, reduction in anti-nutritional compounds, increased nutrient uptake, stronger and healthier roots, improved organoleptic properties (i.e., improved taste), improved consumer health benefits (i.e., increased levels of vitamins and antioxidants), improved post-harvest characteristics (i.e., enhanced shelf-life and/or storage stability, easier processability, easier extraction of compounds), and/or improved seed quality (i.e., for use in following seasons).

For purposes of better understanding the present teachings and in no way limiting the scope of the teachings, unless otherwise indicated, all numbers expressing quantities, percentages or proportions, and other numerical values used in the specification and claims, are to be understood as being modified in all instances by the term "about." Accordingly, unless indicated to the contrary, the numerical parameters set forth in the following specification and attached claims are approximations that may vary depending upon the desired properties sought to be obtained. At the very least, each numerical parameter should at least be construed in light of the number of reported significant digits and by applying ordinary rounding techniques. In this regard, used of the term "about" herein specifically includes ±10% from the indicated values in the range. In addition, the endpoints of all ranges directed to the same component or property herein are inclusive of the endpoints, are independently combinable, and include all intermediate points and ranges. Similarly, the ranges and amounts for each element of the technology described herein can be used together with ranges or amounts for any of the other elements.

Unless otherwise specified, references to percentages of a component present in a combination are by weight (wt.) percentages of the component with respect to the total weight of the combination.

It is further understood that where a parameter range is provided, all integers within that range, and tenths thereof, are also provided by the subject matter. For example, "0.1% to 50%" includes 0.1 %, 0.2 %, 0.3 %, 0.4 % etc. up to 50 %.

When a ratio herein is to be "X:1 or higher", it is meant that the ratio is Y:1, where Y is X or greater, and when a ratio is herein to be "X:1 or lower", it is meant that the ratio is Z:1, where Z is X or less. The same logic follows for ratios that are "1:X or higher" and "1:X or lower".

### Herbicidal composition

It has been surprisingly found that by combining (a) metamitron, (b) a thiocarbamate herbicide, and (c) at least one herbicide selected from the groups consisting of 3-isoxazolidinones, oxyacetamides or urea inhibitors of photosynthesis at PS II, mixtures are produced that exhibit a broad spectrum of control and high efficacy against a very wide range of weeds, as well as having knock-down and long residual effect under different climate conditions. The mixtures and compositions of the present invention are based in part on the finding that application of the mixture of the present invention to a locus or area where weeds control is desired results in improved control thereof.

The combination described herein typically provides a higher herbicidal activity than that the sum of the activities of each of the herbicide when applied at the same rate. Such a combination allows the reduced dosages of the individual herbicides which can damage agriculturally important plants.

The present disclosure relates to a herbicidal composition comprising (a) metamitron, (b) a thiocarbamate herbicide, and (c) at least one herbicide selected from the groups consisting of 3-isoxazolidinones, oxyacetamides or urea inhibitors of photosynthesis at PS II.

The thiocarbamate herbicide may be selected from the group consisting of triallate and prosulfocarb. The herbicidal composition may comprise (a) metamitron, (b) a thiocarbamate herbicide selected from the group consisting of triallate and prosulfocarb, and (c) at least one herbicide selected from the groups consisting of 3-isoxazolidinones, oxyacetamides or urea inhibitors of photosynthesis at PS II.

The 3-isoxazolidinone herbicide may be selected from the group consisting of bixlozone and clomazone. The herbicidal composition may comprise (a) metamitron, (b) a thiocarbamate herbicide, and (c) at least one herbicide selected from the groups consisting of 3-isoxazolidinones selected from the group consisting of bixlozone and clomazone; oxyacetamides or urea inhibitors of photosynthesis at PS II. The herbicidal composition may comprise (a) metamitron, (b) a thiocarbamate herbicide selected from the group consisting of triallate and prosulfocarb, and (c) at least one herbicide selected from the groups consisting of 3-isoxazolidinones selected from the group consisting of bixlozone and clomazone; oxyacetamides or urea inhibitors of photosynthesis at PS II.

The oxyacetamide herbicide may be selected from the group consisting of flufenacet, flufenacet oxalate, and mefenacet. The herbicidal composition may comprise (a) metamitron, (b) a thiocarbamate herbicide, and (c) at least one herbicide selected from the groups consisting of 3-isoxazolidinones, oxyacetamides selected from the group consisting of flufenacet, flufenacet oxalate, and mefenacet; or urea inhibitors of photosynthesis at PS II. The herbicidal composition may comprise (a) metamitron, (b) a thiocarbamate herbicide, and (c) at least one herbicide selected from the groups consisting of 3-isoxazolidinones selected from the group consisting of bixlozone and clomazone; oxyacetamides selected from the group consisting of flufenacet, flufenacet oxalate, and mefenacet; or urea inhibitors of photosynthesis at PS II. The herbicidal composition may comprise (a) metamitron, (b) a thiocarbamate herbicide selected from the group consisting of triallate and prosulfocarb, and (c) at least one herbicide selected from the groups consisting of 3-isoxazolidinones, oxyacetamides selected from the group consisting of flufenacet, flufenacet oxalate, and mefenacet; or urea inhibitors of photosynthesis at PS II. The herbicidal composition may comprise (a) metamitron, (b) a thiocarbamate herbicide selected from the group consisting of triallate and prosulfocarb, and (c) at least one herbicide selected from the groups consisting of 3-isoxazolidinones selected from the group consisting of bixlozone and clomazone; oxyacetamides selected from the group consisting of flufenacet, flufenacet oxalate, and mefenacet; or urea inhibitors of photosynthesis at PS II.

The urea inhibitor of photosynthesis at PS II may be selected from the group consisting of chlorotoluron and diuron. The herbicidal composition may comprise (a) metamitron, (b) a thiocarbamate herbicide, and (c) at least one herbicide selected from the groups consisting of 3-isoxazolidinones, oxyacetamide, or urea inhibitors of photosynthesis at PS II selected from the group consisting of chlorotoluron and diuron. The herbicidal composition may comprise (a) metamitron, (b) a thiocarbamate herbicide, and (c) at least one herbicide selected from the groups consisting of 3-isoxazolidinones selected from the group consisting of bixlozone and clomazone; oxyacetamides selected from the group consisting of flufenacet, flufenacet oxalate, and mefenacet; or urea inhibitors of photosynthesis at PS II selected from the group consisting of chlorotoluron and diuron. The herbicidal composition may comprise (a) metamitron, (b) a thiocarbamate herbicide selected from the group consisting of triallate and prosulfocarb, and (c) at least one herbicide selected from the groups consisting of 3-isoxazolidinones, oxyacetamides or urea inhibitors of photosynthesis at PS II selected from the group consisting of chlorotoluron and diuron. The herbicidal composition may comprise (a) metamitron, (b) a thiocarbamate herbicide selected from the group consisting of triallate and prosulfocarb, and (c) at least one herbicide selected from the groups consisting of 3-isoxazolidinones selected from the group consisting of bixlozone and clomazone; oxyacetamides selected from the group consisting of flufenacet, flufenacet oxalate, and mefenacet; or urea inhibitors of photosynthesis at PS II selected from the group consisting of chlorotoluron and diuron.

In an embodiment, the herbicidal composition comprises (a) metamitron, (b) a thiocarbamate herbicide selected from the group consisting of triallate and prosulfocarb, and (c) at least one herbicide selected from the group consisting of a 3-isoxazolidinone which is bixlozone; an oxyacetamide which is flufenacet; or a urea inhibitor of photosynthesis at PS II which is chlorotoluron.

In an embodiment, the herbicidal composition comprises (a) metamitron, (b) triallate, and (c) bixlozone.

In an embodiment, the herbicidal composition comprises (a) metamitron, (b) triallate, and (c) flufenacet.

In an embodiment, the herbicidal composition comprises (a) metamitron, (b) triallate, and (c) chlorotoluron.

In an embodiment, the herbicidal composition comprises (a) metamitron, (b) triallate, and (c) diuron.

In an embodiment, the herbicidal composition comprises (a) metamitron, (b) prosulfocarb, and (c) bixlozone.

In an embodiment, the herbicidal composition comprises (a) metamitron, (b) prosulfocarb, and (c) flufenacet.

In an embodiment, the herbicidal composition comprises (a) metamitron, (b) prosulfocarb, and (c) chlorotoluron.

In an embodiment, the herbicidal composition comprises (a) metamitron, (b) prosulfocarb, and (c) diuron.

The total amount of (a) metamitron in the herbicidal composition may be such that it provides metamitron, to the applied field, in a dosage range of about 200 g/ha to about 3500 g/ha, in a dosage range of about 400 g/ha to about 3000 g/ha, in a dosage range of about 500 g/ha to about 2800 g/ha.

The total amount of (b) thiocarbamate herbicide in the herbicidal composition may be such that it provides the thiocarbamate herbicide, to the applied field, in a dosage range of about 500 g/ha to about 5000 g/ha, in a dosage range of about 750 g/ha to about 4500 g/ha, in a dosage range of about 1000 g/ha to about 4000 g/ha

The total amount of (c) herbicide when it is a 3-isoxazolidinone in the herbicidal composition may be such that it provides the 3-isoxazolidinone herbicide, to the applied field, in a dosage range of about 50 g/ha to about 750 g/ha, in a dosage range of about 100 g/ha to about 600 g/ha, in a dosage range of about 200 g/ha to about 500 g/ha.

The total amount of (c) herbicide when it is an oxyacetamide in the herbicidal composition may be such that it provides the oxyacetamide herbicide, to the applied field, in a dosage range of about 10 g/ha to about 500 g/ha, in a dosage range of about 25 g/ha to about 400 g/ha, in a dosage range of about 50 g/ha to about 300 g/ha.

The total amount of (c) herbicide when it is urea inhibitor of photosynthesis at PS II in the herbicidal composition may be such that it provides the urea inhibitor of photosynthesis at PS II herbicide, to the applied field, in a dosage range of about 50 g/ha to about 2500 g/ha, in a dosage range of about 100 g/ha to about 2000 g/ha, in a dosage range of about 150 g/ha to about 1800 g/ha.

The total amount of (a) metamitron in the herbicidal composition may be such that it provides metamitron, to the applied field, in a dosage range of about 200 g/ha to about 3500 g/ha; the total amount of (b) thiocarbamate herbicide may be such that it provides thiocarbamate herbicide, to the applied field, in a dosage range of about 500 g/ha to about 5000 g/ha; and the total amount of (c) herbicide selected from the groups consisting of 3-isoxazolidinones, oxyacetamides or urea inhibitors of photosynthesis at PS II may be such that it provides 3-isoxazolidinones, to the applied field, in a dosage range of about 50 g/ha to about 750 g/ha; it provides oxyacetamides, to the applied field, in a dosage range of about 10 g/ha to about 500 g/ha; or it provides urea inhibitors of photosynthesis at PS II, to the applied field, in a dosage range of about 50 g/ha to about 2500 g/ha.

The total amount of (a) metamitron in the herbicidal composition may be such that it provides metamitron, to the applied field, in a dosage range of about 400 g/ha to about 3000 g/ha; the total amount of (b) thiocarbamate herbicide may be such that it provides thiocarbamate herbicide, to the applied field, in a dosage range of about 750 g/ha to about 4500 g/ha; and the total amount of (c) herbicide selected from the groups consisting of 3-isoxazolidinones, oxyacetamides or urea inhibitors of photosynthesis at PS II may be such that it provides 3-isoxazolidinones, to the applied field, in a dosage range of about 100 g/ha to about 600 g/ha; it provides oxyacetamides, to the applied field, in a dosage range of about 25 g/ha to about 400 g/ha; or it provides urea inhibitors of photosynthesis at PS II, to the applied field, in a dosage range of about 100 g/ha to about 2000 g/ha.

The total amount of (a) metamitron in the herbicidal composition may be such that it provides metamitron, to the applied field, in a dosage range of about 500 g/ha to about 2800 g/ha; the total amount of (b) thiocarbamate herbicide may be such that it provides thiocarbamate herbicide, to the applied field, in a dosage range of about 1000 g/ha to about 4000 g/ha; and the total amount of (c) herbicide selected from the groups consisting of 3-isoxazolidinones, oxyacetamides or urea inhibitors of photosynthesis at PS II may be such that it provides 3-isoxazolidinones, to the applied field, in a dosage range of about 200 g/ha to about 500 g/ha; it provides oxyacetamides, to the applied field, in a dosage range of about 50 g/ha to about 300 g/ha; or it provides urea inhibitors of photosynthesis at PS II, to the applied field, in a dosage range of about 150 g/ha to about 1800 g/ha.

The herbicidal composition may comprise (a) metamitron in a total amount in the herbicidal composition such that it provides metamitron, to the applied field, in a dosage range of about 200 g/ha to about 3500 g/ha, (b) a thiocarbamate herbicide selected from the group consisting of triallate and prosulfocarb in a total amount in the herbicidal composition such that it provides the thiocarbamate herbicide, to the applied field, in a dosage range of about 500 g/ha to about 5000 g/ha, and (c) at least one herbicide selected from the groups consisting of 3-isoxazolidinones, oxyacetamides or urea inhibitors of photosynthesis at PS II, in a total amount such that it provides 3-isoxazolidinones, to the applied field, in a dosage range of about 50 g/ha to about 750 g/ha; it provides oxyacetamides, to the applied field, in a dosage range of about 10 g/ha to about 500 g/ha; or it provides urea inhibitors of photosynthesis at PS II, to the applied field, in a dosage range of about 50 g/ha to about 2500 g/ha.

The herbicidal composition may comprise (a) metamitron in a total amount in the herbicidal composition such that it provides metamitron, to the applied field, in a dosage range of about 400 g/ha to about 3000 g/ha, (b) a thiocarbamate herbicide selected from the group consisting of triallate and prosulfocarb in a total amount in the herbicidal composition such that it provides the thiocarbamate herbicide, to the applied field, in a dosage range of about 750 g/ha to about 4500 g/ha, and (c) at least one herbicide selected from the groups consisting of 3-isoxazolidinones selected from the group consisting of bixlozone and clomazone; oxyacetamides selected from the group consisting of flufenacet, flufenacet oxalate, and mefenacet; or urea inhibitors of photosynthesis at PS II selected from the group consisting of chlorotoluron and diuron, in a total amount such that it provides 3-isoxazolidinones, to the applied field, in a dosage range of about 100 g/ha to about 600 g/ha; it provides oxyacetamides, to the applied field, in a dosage range of about 25 g/ha to about 400 g/ha; or it provides urea inhibitors of photosynthesis at PS II, to the applied field, in a dosage range of about 100 g/ha to about 2000 g/ha.

The herbicidal composition may comprise (a) metamitron in a total amount in the herbicidal composition such that it provides metamitron, to the applied field, in a dosage range of about 500 g/ha to about 2800 g/ha, (b) a thiocarbamate herbicide selected from the group consisting of triallate and prosulfocarb, in a total amount in the herbicidal composition such that it provides the thiocarbamate herbicide, to the applied field, in a dosage range of about 1000 g/ha to about 4000 g/ha, and (c) at least one herbicide selected from the group consisting of a 3-isoxazolidinone which is bixlozone; a oxyacetamide which is flufenacet; or an urea inhibitor of photosynthesis at PS II which is chlorotoluron, in a total amount such that it provides the 3-isoxazolidinone, to the applied field, in a dosage range of about 200 g/ha to about 500 g/ha; it provides oxyacetamides, to the applied field, in a dosage range of about 50 g/ha to about 300 g/ha; or it provides the urea inhibitor of photosynthesis at PS II, to the applied field, in a dosage range of about 150 g/ha to about 1800 g/ha.

The ratio by weight (a) metamitron : (b) thiocarbamate in the herbicidal composition of the invention varies depending upon various conditions such as the type of the formulation, weather conditions, the type of plant and the type of weed. The ratio by weight (a) metamitron : (b) thiocarbamate may range from 1:8 to 3:1.

The present herbicidal composition may be employed or prepared in any conventional form, for example, as wettable powders (WP), emulsion concentrates (EC), microemulsion concentrates (MEC), water-soluble powders (SP), water-soluble concentrates (SL), suspoemulsion (SE), oil dispersions (OD), concentrated emulsions (BW) such as oil-in-water and water-in-oil emulsions, sprayable solutions or emulsions, capsule suspensions (CS), suspension concentrates (SC), dusts (DP), oil-miscible solutions (OL), seed-dressing products, granules (GR) in the form of microgranules, spray granules, coated granules and absorption granules, granules for soil application or broadcasting, water-soluble granules (SG), water-dispersible granules (WDG), ULV formulations, microcapsules (ZC) or waxes. These individual formulation types are known in the art. These herbicidal compositions may also be provided as a pre-mix or tank mixed.

The present herbicidal composition may optionally contain one or more agriculturally acceptable inert additives, adjuvants and/or a further active ingredient.

Among the further active ingredients, the herbicidal composition of the invention may optionally comprise an effective amount of at least one herbicide selected from, but not limited to, herbicides belonging to classes such as lipid synthesis inhibitors, ALS inhibitors, photosynthesis PS II inhibitors, PS I electron diversion, protoporphyrinogen oxidase inhibitors, pigment synthesis inhibitors, PDS inhibitors, 4-HPPD inhibitors, DOXP synthase inhibitors, EPSP synthase inhibitors, glutamine synthetase inhibitors, DHP inhibitors, microtubule assembly inhibitors, microtubule organization inhibitors, cell division inhibitors, cellulose synthesis inhibitors, synthetic auxins, auxin transport inhibitors, as well as herbicides with unknown modes of action.

### Tank mix

The present disclosure also relates to a tank mix combination comprising (a) metamitron, (b) a thiocarbamate herbicide, and (c) at least one herbicide selected from the groups consisting of 3-isoxazolidinones, oxyacetamides or urea inhibitors of photosynthesis at PS II, and (d) at least one adjuvant, additive and/or an active ingredient.

In one embodiment, the herbicidal composition of the invention may be mixed with tank adjuvants, additives and/or an active ingredients, to yield a tank mix, prior to their application in the field to improve physical properties and efficacy.

In other embodiment, (a) metamitron, (b) the thiocarbamate herbicide, and/or (c) the at least one herbicide selected from the groups consisting of 3-isoxazolidinones, oxyacetamides or urea inhibitors of photosynthesis at PS II are individually or jointly added to the tank mix together with (d) the at least one adjuvant, additive and/or an active ingredient.

The tank adjuvants and additives can be the same type of adjuvants or agriculturally acceptable inert additives added into the herbicidal composition, i.e. the tank additives may be chelating agents, thickeners, anti-foam agents, pH buffers, antifreeze agents, surfactants, emulsifiers, wetting agents or humectants, suspending agents, stabilizers, anti-oxidation agents, preservative agents, inverting agents, UV absorbers, binders, pigments, colorants or solvents; and the tank adjuvants may be safeners, spreading agents, plant penetrants (or translocators), compatibility agents, drift retardants, soil penetrants, stickers or fertilizers.

The tank active ingredients can be the same type of active ingredients added into the herbicidal composition. In case that the added active ingredient is an herbicide, the herbicide belongs to classes such as lipid synthesis inhibitors, ALS inhibitors, photosynthesis PS II inhibitors, PS I electron diversion, protoporphyrinogen oxidase inhibitors, pigment synthesis inhibitors, PDS inhibitors, 4-HPPD inhibitors, DOXP synthase inhibitors, EPSP synthase inhibitors, glutamine synthetase inhibitors, DHP inhibitors, microtubule assembly inhibitors, microtubule organization inhibitors, cell division inhibitors, cellulose synthesis inhibitors, synthetic auxins, auxin transport inhibitors, as well as herbicides with unknown modes of action.

### Methods and Applications

The present document also discloses a method for the control of weeds comprising contacting an effective amount of (a) metamitron, (b) a thiocarbamate herbicide, and (c) at least one herbicide selected from the groups consisting of 3-isoxazolidinones, oxyacetamides or urea inhibitors of photosynthesis at PS II, with at least a locus where the weed is to be controlled.

The plant in the method of the invention may be a cereal or potato plant. The cereal plant may be wheat, in anyone of its varieties like for example common wheat, spelt, durum, einkorn, emmer, Khorasan, red fife or club wheat; barley, maize, rice, oat, millet, rye, triticale, sorghum, fonio, teff or adlay.

The method of the present disclosure may be a pre-emergence of the plant method of treatment of the weed to be controlled or a post-emergence of the plant method of treatment of the weed.

The herbicide active ingredients (a), (b) and (c) of the method of the present invention may be applied either simultaneously or sequentially, to the same or different parts of the locus, i.e. to the same or different parts of the plant, propagation material, soil, area adjacent to the plant, root, foliage and/or seed, such that the three herbicides (a), (b) and (c) may be applied as a tank mix, or as a ready mix, or separately in a simultaneous or sequential way.

The total amount of (a) metamitron in the method of the present disclosure may be such that it provides metamitron, to the applied field, in a dosage range of about 200 g/ha to about 3500 g/ha, in a dosage range of about 400 g/ha to about 3000 g/ha, in a dosage range of about 500 g/ha to about 2800 g/ha.

The total amount of (b) thiocarbamate herbicide in the method of the present disclosure may be such that it provides the thiocarbamate herbicide, to the applied field, in a dosage range of about 500 g/ha to about 5000 g/ha, in a dosage range of about 750 g/ha to about 4500 g/ha, in a dosage range of about 1000 g/ha to about 4000 g/ha.

The total amount of (c) herbicide when it is a 3-isoxazolidinone in the method of the present disclosure may be such that it provides the 3-isoxazolidinone herbicide, to the applied field, in a dosage range of about 50 g/ha to about 750 g/ha, in a dosage range of about 100 g/ha to about 600 g/ha, in a dosage range of about 200 g/ha to about 500 g/ha.

The total amount of (c) herbicide when it is an oxyacetamide in the method of the present disclosure may be such that it provides the oxyacetamide herbicide, to the applied field, in a dosage range of about 10 g/ha to about 500 g/ha, in a dosage range of about 25 g/ha to about 400 g/ha, in a dosage range of about 50 g/ha to about 300 g/ha

The total amount of (c) herbicide when it is an urea inhibitor of photosynthesis at PS II in the method of the present disclosure may be such that it provides the urea inhibitor of photosynthesis at PS II, to the applied field, in a dosage range of about 50 g/ha to about 2500 g/ha, in a dosage range of about 100 g/ha to about 2000 g/ha, in a dosage range of about 150 g/ha to about 1800 g/ha.

The total amount of (a) metamitron in the method of the present disclosure may be such that it provides metamitron, to the applied field, in a dosage range of about 200 g/ha to about 3500 g/ha; the total amount of (b) thiocarbamate herbicide may be such that it provides the thiocarbamate herbicide, to the applied field, in a dosage range of about 500 g/ha to about 5000 g/ha; and the total amount of (c) herbicide selected from the groups consisting of 3-isoxazolidinones, oxyacetamides or urea inhibitors of photosynthesis at PS II may be such that it provides 3-isoxazolidinones, to the applied field, in a dosage range of about 50 g/ha to about 750 g/ha; it provides oxyacetamides, to the applied field, in a dosage range of about 10 g/ha to about 500 g/ha; or it provides urea inhibitors of photosynthesis at PS II, to the applied field, in a dosage range of about 50 g/ha to about 2500 g/ha.

The total amount of (a) metamitron in the method of the present disclosure may be such that it provides metamitron, to the applied field, in a dosage range of about 400 g/ha to about 3000 g/ha; the total amount of (b) thiocarbamate herbicide may be such that it provides the thiocarbamate herbicide, to the applied field, in a dosage range of about 750 g/ha to about 4500 g/ha; and the total amount of (c) herbicide selected from the groups consisting of 3-isoxazolidinones, oxyacetamides or urea inhibitors of photosynthesis at PS II may be such that it provides 3-isoxazolidinones, to the applied field, in a dosage range of about 100 g/ha to about 600 g/ha; it provides oxyacetamides, to the applied field, in a dosage range of about 25 g/ha to about 400 g/ha; or it provides urea inhibitors of photosynthesis at PS II, to the applied field, in a dosage range of about 100 g/ha to about 2000 g/ha.

The total amount of (a) metamitron in the method of the present disclosure may be such that it provides metamitron, to the applied field, in a dosage range of about 500 g/ha to about 2800 g/ha; the total amount of (b) thiocarbamate herbicide may be such that it provides the thiocarbamate herbicide, to the applied field, in a dosage range of about 1000 g/ha to about 4000 g/ha; and the total amount of (c) herbicide selected from the groups consisting of 3-isoxazolidinones, oxyacetamides or urea inhibitors of photosynthesis at PS II may be such that it provides 3-isoxazolidinones, to the applied field, in a dosage range of about 200 g/ha to about 500 g/ha; it provides oxyacetamides, to the applied field, in a dosage range of about 50 g/ha to about 300 g/ha; or it provides urea inhibitors of photosynthesis at PS II, to the applied field, in a dosage range of about 150 g/ha to about 1800 g/ha.

The total amount of (a) metamitron in the method of the present disclosure may be such that it provides metamitron, to the applied field, in a dosage range of about 200 g/ha to about 3500 g/ha; the total amount of (b) thiocarbamate herbicide selected from the group consisting of triallate and prosulfocarb may be such that it provides the thiocarbamate herbicide, to the applied field, in a dosage range of about 500 g/ha to about 5000 g/ha; and the total amount of (c) herbicide selected from the groups consisting of 3-isoxazolidinones, oxyacetamides or urea inhibitors of photosynthesis at PS II may be such that it provides 3-isoxazolidinones, to the applied field, in a dosage range of about 50 g/ha to about 750 g/ha; it provides oxyacetamides, to the applied field, in a dosage range of about 10 g/ha to about 500 g/ha; or it provides urea inhibitors of photosynthesis at PS II, to the applied field, in a dosage range of about 50 g/ha to about 2500 g/ha.

The total amount of (a) metamitron in the method of the present disclosure may be such that it provides metamitron, to the applied field, in a dosage range of about 400 g/ha to about 3000 g/ha; the total amount of (b) thiocarbamate herbicide selected from the group consisting of triallate and prosulfocarb may be such that it provides the thiocarbamate herbicide, to the applied field, in a dosage range of about 750 g/ha to about 4500 g/ha; and the total amount of (c) herbicide selected from the groups consisting of 3-isoxazolidinones selected from the group consisting of bixlozone and clomazone; oxyacetamides selected from the group consisting of flufenacet, flufenacet oxalate, and mefenacet; or urea inhibitors of photosynthesis at PS II selected from the group consisting of chlorotoluron and diuron, may be such that it provides 3-isoxazolidinones, to the applied field, in a dosage range of about 100 g/ha to about 600 g/ha; it provides oxyacetamides, to the applied field, in a dosage range of about 25 g/ha to about 400 g/ha; or it provides urea inhibitors of photosynthesis at PS II, to the applied field, in a dosage range of about 100 g/ha to about 2000 g/ha.

The total amount of (a) metamitron in the method of the present disclosure may be such that it provides metamitron, to the applied field, in a dosage range of about 500 g/ha to about 2800 g/ha; the total amount of (b) thiocarbamate herbicide selected from the group consisting of triallate and prosulfocarb may be such that it provides the thiocarbamate herbicide, to the applied field, in a dosage range of about 1000 g/ha to about 4000 g/ha; and the total amount of (c) herbicide selected from the groups consisting of a 3-isoxazolidinone which may be bixlozone, an oxyacetamide which may be flufenacet, or an urea inhibitor of photosynthesis at PS II which may be chlorotoluron, may be such that it provides the 3-isoxazolidinone, to the applied field, in a dosage range of about 200 g/ha to about 500 g/ha; it provides the oxyacetamide, to the applied field, in a dosage range of about 50 g/ha to about 300 g/ha; or it provides the urea inhibitor of photosynthesis at PS II, to the applied field, in a dosage range of about 150 g/ha to about 1800 g/ha.

The ratio by weight (a) metamitron : (b) thiocarbamate in the method of the invention varies depending upon various conditions such as the type of the formulation, weather conditions, the type of plant and the type of weed. The ratio by weight (a) metamitron : (b) thiocarbamate may range from 1:8 to 3:1.

The weed in the method of the present disclosure may be selected from the group consisting of Alopecurus myosuroides Huds. (blackgrass, ALOMY), Apera spica venti (APESV), Poa annua (POAAN), Lolium species (LOLSS), Lolium multiflorum Lam. (Italian ryegrass, LOLMU) or Lolium perenne (English ryegrass, LOLPE).

### Kit-of-parts

The present document also discloses a kit-of-parts comprising a plurality of components, wherein said plurality of components comprises: (a) a component comprising at least metamitron, (b) a component comprising at least a thiocarbamate herbicide, (c) a component comprising at least one herbicide selected from the groups consisting of 3-isoxazolidinones, oxyacetamides or urea inhibitors of photosynthesis at PS II, and (d) an instruction manual comprising instructions to admix the components before being used.

The thiocarbamate herbicide of the kit-of-parts may be selected from the group consisting of triallate and prosulfocarb. The kit-of-parts may comprise: (a) a component comprising at least metamitron, (b) a component comprising at least a thiocarbamate herbicide selected from the group consisting of triallate and prosulfocarb, (c) a component comprising at least one herbicide selected from the groups consisting of 3-isoxazolidinones, oxyacetamides or urea inhibitors of photosynthesis at PS II, and (d) an instruction manual comprising instructions to admix the components before being used.

The 3-isoxazolidinone herbicide of the kit-of-parts may be selected from the group consisting of bixlozone and clomazone. The kit-of-parts may comprise: (a) a component comprising at least metamitron, (b) a component comprising at least a thiocarbamate herbicide, (c) a component comprising at least one herbicide selected from the groups consisting of 3-isoxazolidinones selected from the group consisting of bixlozone and clomazone; oxyacetamides or urea inhibitors of photosynthesis at PS II, and (d) an instruction manual comprising instructions to admix the components before being used. The kit-of-parts may comprise: (a) a component comprising at least metamitron, (b) a component comprising at least a thiocarbamate herbicide selected from the group consisting of triallate and prosulfocarb, (c) a component comprising at least one herbicide selected from the groups consisting of 3-isoxazolidinones selected from the group consisting of bixlozone and clomazone; oxyacetamides or urea inhibitors of photosynthesis at PS II, and (d) an instruction manual comprising instructions to admix the components before being used.

The oxyacetamide herbicide of the kit-of-parts may be selected from the group consisting of flufenacet, flufenacet oxalate, and mefenacet. The kit-of-parts may comprise: (a) a component comprising at least metamitron, (b) a component comprising at least a thiocarbamate herbicide, (c) a component comprising at least one herbicide selected from the groups consisting of 3-isoxazolidinones, oxyacetamides selected from the group consisting of flufenacet, flufenacet oxalate, and mefenacet; or urea inhibitors of photosynthesis at PS II, and (d) an instruction manual comprising instructions to admix the components before being used. The kit-of-parts may comprise: (a) a component comprising at least metamitron, (b) a component comprising at least a thiocarbamate herbicide, (c) a component comprising at least one herbicide selected from the groups consisting of 3-isoxazolidinones selected from the group consisting of bixlozone and clomazone; oxyacetamides selected from the group consisting of flufenacet, flufenacet oxalate, and mefenacet; or urea inhibitors of photosynthesis at PS II, and (d) an instruction manual comprising instructions to admix the components before being used. The kit-of-parts may comprise: (a) a component comprising at least metamitron, (b) a component comprising at least a thiocarbamate herbicide selected from the group consisting of triallate and prosulfocarb, (c) a component comprising at least one herbicide selected from the groups consisting of 3-isoxazolidinones, oxyacetamides selected from the group consisting of flufenacet, flufenacet oxalate, and mefenacet; or urea inhibitors of photosynthesis at PS II, and (d) an instruction manual comprising instructions to admix the components before being used. The kit-of-parts may comprise: (a) a component comprising at least metamitron, (b) a component comprising at least a thiocarbamate herbicide selected from the group consisting of triallate and prosulfocarb, (c) a component comprising at least one herbicide selected from the groups consisting of 3-isoxazolidinones selected from the group consisting of bixlozone and clomazone; oxyacetamides selected from the group consisting of flufenacet, flufenacet oxalate, and mefenacet; or urea inhibitors of photosynthesis at PS II, and (d) an instruction manual comprising instructions to admix the components before being used.

The urea inhibitor of photosynthesis at PS II herbicide of the kit-of-parts may be selected from the group consisting of chlorotoluron and diuron. The kit-of-parts may comprise: (a) a component comprising at least metamitron, (b) a component comprising at least a thiocarbamate herbicide, (c) a component comprising at least one herbicide selected from the groups consisting of 3-isoxazolidinones, oxyacetamides or urea inhibitors of photosynthesis at PS II selected from the group consisting of chlorotoluron and diuron, and (d) an instruction manual comprising instructions to admix the components before being used. The kit-of-parts may comprise: (a) a component comprising at least metamitron, (b) a component comprising at least a thiocarbamate herbicide, (c) a component comprising at least one herbicide selected from the groups consisting of 3-isoxazolidinones selected from the group consisting of bixlozone and clomazone; oxyacetamides selected from the group consisting of flufenacet, flufenacet oxalate, and mefenacet; or urea inhibitors of photosynthesis at PS II selected from the group consisting of chlorotoluron and diuron, and (d) an instruction manual comprising instructions to admix the components before being used. The kit-of-parts may comprise: (a) a component comprising at least metamitron, (b) a component comprising at least a thiocarbamate herbicide selected from the group consisting of triallate and prosulfocarb, (c) a component comprising at least one herbicide selected from the groups consisting of 3-isoxazolidinones, oxyacetamides or urea inhibitors of photosynthesis at PS II selected from the group consisting of chlorotoluron and diuron, and (d) an instruction manual comprising instructions to admix the components before being used. The kit-of-parts may comprise: (a) a component comprising at least metamitron, (b) a component comprising at least a thiocarbamate herbicide selected from the group consisting of triallate and prosulfocarb, (c) a component comprising at least one herbicide selected from the groups consisting of 3-isoxazolidinones selected from the group consisting of bixlozone and clomazone; oxyacetamides selected from the group consisting of flufenacet, flufenacet oxalate, and mefenacet; or urea inhibitors of photosynthesis at PS II selected from the group consisting of chlorotoluron and diuron, and (d) an instruction manual comprising instructions to admix the components before being used.

In an embodiment, the kit-of-parts comprises a plurality of components, wherein said plurality of components comprises: (a) a component comprising at least metamitron, (b) a component comprising at least a thiocarbamate herbicide selected from the group consisting of triallate and prosulfocarb, (c) a component comprising at least one herbicide selected from the group consisting of a 3-isoxazolidinone which is bixlozone, an oxyacetamide which is flufenacet, or an urea inhibitor of photosynthesis at PS II which is chlorotoluron, and (d) an instruction manual comprising instructions to admix the components before being used.

In an embodiment, the kit-of-parts comprises a plurality of components, wherein said plurality of components comprises: (a) a component comprising at least metamitron, (b) a component comprising at least triallate, (c) a component comprising at least bixlozone, and (d) an instruction manual comprising instructions to admix the components before being used.

In an embodiment, the kit-of-parts comprises a plurality of components, wherein said plurality of components comprises: (a) a component comprising at least metamitron, (b) a component comprising at least triallate, (c) a component comprising at least flufenacet, and (d) an instruction manual comprising instructions to admix the components before being used.

In an embodiment, the kit-of-parts comprises a plurality of components, wherein said plurality of components comprises: (a) a component comprising at least metamitron, (b) a component comprising at least triallate, (c) a component comprising at least chlorotoluron, and (d) an instruction manual comprising instructions to admix the components before being used.

In an embodiment, the kit-of-parts comprises a plurality of components, wherein said plurality of components comprises: (a) a component comprising at least metamitron, (b) a component comprising at least triallate, (c) a component comprising at least diuron, and (d) an instruction manual comprising instructions to admix the components before being used.

In an embodiment, the kit-of-parts comprises a plurality of components, wherein said plurality of components comprises: (a) a component comprising at least metamitron, (b) a component comprising at least prosulfocarb, (c) a component comprising at least bixlozone, and (d) an instruction manual comprising instructions to admix the components before being used.

In an embodiment, the kit-of-parts comprises a plurality of components, wherein said plurality of components comprises: (a) a component comprising at least metamitron, (b) a component comprising at least prosulfocarb, (c) a component comprising at least flufenacet, and (d) an instruction manual comprising instructions to admix the components before being used.

In an embodiment, the kit-of-parts comprises a plurality of components, wherein said plurality of components comprises: (a) a component comprising at least metamitron, (b) a component comprising at least prosulfocarb, (c) a component comprising at least chlorotoluron, and (d) an instruction manual comprising instructions to admix the components before being used.

In an embodiment, the kit-of-parts comprises a plurality of components, wherein said plurality of components comprises: (a) a component comprising at least metamitron, (b) a component comprising at least prosulfocarb, (c) a component comprising at least diuron, and (d) an instruction manual comprising instructions to admix the components before being used.

## Claims

1. A herbicidal composition comprising (a) metamitron, (b) a thiocarbamate herbicide, and (c) at least one herbicide selected from the groups consisting of 3-isoxazolidinones, oxyacetamides or urea inhibitors of photosynthesis at PS II.

2. The herbicidal composition according to claim 1, wherein the thiocarbamate herbicide is selected from the group consisting of triallate and prosulfocarb.

3. The herbicidal composition according to any of previous claims, wherein the 3-isoxazolidinone is selected from the group consisting of bixlozone and clomazone.

4. The herbicidal composition according to any of previous claims, wherein the oxyacetamide is selected from the group consisting of flufenacet, flufenacet oxalate, and mefenacet.

5. The herbicidal composition according to any of previous claims, wherein the urea inhibitor of photosynthesis at PS II is selected from the group consisting of chlorotoluron and diuron.

6. The herbicidal composition according to any of previous claims comprising (a) metamitron, (b) a thiocarbamate selected from the group consisting of triallate and prosulfocarb, and (c) at least one herbicide selected from the group consisting of a 3-isoxazolidinone which is bixlozone, an oxyacetamide herbicide which is flufenacet, or an urea inhibitor of photosynthesis at PS II which is chlorotoluron.

7. A tank mix combination comprising (a) metamitron, (b) a thiocarbamate herbicide, and (c) at least one herbicide selected from the groups consisting of 3-isoxazolidinones, oxyacetamides or urea inhibitors of photosynthesis at PS II, and (d) at least one adjuvant, additive and/or an active ingredient.

8. A method for the control of weeds comprising contacting an effective amount of (a) metamitron, (b) a thiocarbamate herbicide, and (c) at least one herbicide selected from the groups consisting of 3-isoxazolidinones, oxyacetamides or urea inhibitors of photosynthesis at PS II, with at least a locus where the weed is to be controlled.

9. The method according to claim 8, wherein the herbicide active ingredients (a), (b) and (c) are applied as a tank mix, or as a ready mix, or separately, in the same or different parts of the locus, plant, propagation material, soil, area adjacent to the plant, root, foliage and/or seed, either simultaneously or sequentially.

10. The method according to any of claims 8 to 9, wherein metamitron is applied in a field, in a dosage range of about 200 g/ha to about 3500 g/ha.

11. The method according to any of claims 8 to 10, wherein the thiocarbamate herbicide is applied in a field, in a dosage range of about 500 g/ha to about 5000 g/ha. 1kh to 4 kg

12. The method according to any of claims 8 to 11, wherein the 3-isoxazolidinone is applied in a field, in a dosage range of about 50 g/ha to about 750 g/ha, or the oxyacetamide is applied in a field, in a dosage range of about 10 g/ha to about 500 g/ha, or the urea inhibitor of photosynthesis at PS II is applied in a field, in a dosage range of about 50 g/ha to about 2500 g/ha.

13. The method according to any of claims 8 to 12, wherein the plant is a cereal or potato plant.

14. The method according to any of claims 8 to 13, wherein the weed is selected from the group consisting of Alopecurus myosuroides Huds. (blackgrass, ALOMY), Apera spica venti (APESV), Poa annua (POAAN), Lolium species (LOLSS), Lolium multiflorum Lam. (Italian ryegrass, LOLMU) or Lolium perenne (English ryegrass, LOLPE).

15. A kit-of-parts comprising a plurality of components, wherein said plurality of components comprises: (a) a component comprising at least metamitron, (b) a component comprising at least a thiocarbamate herbicide, (c) a component comprising at least one herbicide selected from the groups consisting of 3-isoxazolidinones, oxyacetamides or urea inhibitors of photosynthesis at PS II, and (d) an instruction manual comprising instructions to admix the components before being used.
